# EUROPÄISCHE PATENTSCHRIFT

(11) **EP 0 399 425 B1**
(45) Veröffentlichungstag und Bekanntmachung des Hinweises auf die Patenterteilung: **29.03.1995**
(21) Anmeldenummer: 90109573.7
(22) Anmeldetag: 19.05.1990
(51) Int. Cl.: C23C 22/36, F16C 33/12

(54) **Verfahren zum Aufbringen einer Phosphat-Laufschicht auf eine Lagermetallschicht**
Process for applying a phosphate running layer on a bearing metal layer
Procédé pour appliquer une couche de roulement à base de phosphate sur une couche de métal pour coussinets

(30) Priorität: 20.05.1989 DE 3916498
(43) Veröffentlichungstag der Anmeldung: 28.11.1990
(73) Patentinhaber: KOLBENSCHMIDT Aktiengesellschaft, D-74150 Neckarsulm (DE)
(72) Erfinder: Pfestorf, Harald, D-7101 Untereisesheim (DE)
(74) Vertreter: Rieger, Harald, Dr.

(56) Entgegenhaltungen:
- EP-A- 0 059 273
- EP-A- 0 154 367
- FR-A- 1 263 025
- FR-A- 1 526 726
- GB-A- 663 100
- US-A- 2 312 855
- US-A- 2 477 841
- US-A- 2 500 673
- W. RAUSCH, Die Phosphatierung von Metallen, Eugen G. Leuze Verlag, Saulgau (DE), 1974, Seiten 219-220.

## Beschreibung

Die Erfindung betrifft ein Verfahren zum Aufbringen einer 0,5 bis 10 »m, vorzugsweise 2 bis 8 »m, dicken Phosphat-Laufschicht auf die Lagermetallschicht von Gleitlagerschalen, insbesondere für die Lagerung von hochbelasteten Triebwerkselementen in Verbrennungskraftmaschinen, vorzugsweise für die Lagerung der Pleuel- und Lagerzapfen von Kurbelwellen, mittels einer wäßrigen, Zink enthaltenden Phosphatierungslösung.

Die beachtliche Leistungssteigerung neuerer Verbrennungskraftmaschinen, bei gleichen Hauptabmessungen und ohne Beeinträchtigung der Betriebssicherheit und Lebensdauer sowie ohne besondere Bedingungen an die Kraftstoffqualität, wird durch Erhöhung der Drehzahlen und des effektiven Mitteldrucks erreicht, insbesondere aber durch die Abgasturboaufladung. Als Folge davon zeigt sich, daß u.a. die im Motorbetrieb entstehenden Schädigungen an Gleitlagerschalen für die Pleuel- und Lagerzapfen der Kurbelwellen die Lebensdauer der Verbrennungskraftmaschinen nicht unbeachtlich begrenzen. Der Fachmann sieht sich daher vor die Aufgabe gestellt, hinsichtlich Festigkeits- und Funktionssicherheit verbesserte Gleitlagerschalen bereitzustellen.

So wurde u.a. versucht, die Ermüdungsfestigkeit von Pleuellagerschalen mit Stahlrücken und darauf befindlicher Lagerwerkstoffschicht aus einer Blei-Bronze-Legierung, die mit einer galvanisch aufgebrachten Laufschicht versehen ist, den gestiegenen Anforderungen anzupassen, indem die Dicke der galvanisch aufgebrachten Laufschicht reduziert wurde. Dies brachte zwar eine höhere Ermüdungsfestigkeit speziell der Laufschicht, das Problem des hohen Verschleißes war aber damit nicht gelöst. Als Folge stellten sich Lagerschäden ein, wenn die Blei-Bronze-Legierung der Lagerwerkstoffschicht zum Tragen kam. Durch Anheben des Kupferanteils in der Laufschicht von ca. 3 % auf ca. 6 % versuchte man, den Verschleißwiderstand zu verbessern. Diese Maßnahme hat teilweise zu längeren Standzeiten der Pleuellager geführt. Es konnten jedoch nicht in allen Fällen zufriedenstellende Laufergebnisse erzielt werden.

Eine höhere Ermüdungsfestigkeit und sehr gute Gleiteigenschaften, auch nach dem Verschleiß der Laufschicht, weisen Verbundlager auf, die aus einem Stahlrücken, der die Ermüdungsfestigkeit der darauf aufplattierten Schicht einer Aluminium-Lagerlegierung erhöht, und einer darauf galvanisch abgeschiedenen dünnen Laufschicht aus Blei- oder Zinn-Legierungen von 3 bis 30 »m Dicke bestehen, wobei in aller Regel zwischen der Schicht der Aluminium-Lagerlegierung und der Laufschicht eine Nickel-Zwischenschicht angeordnet ist, um eine einwandfreie Haftung der Laufschicht auf der Aluminium-Lagerlegierung zu gewährleisten (Technisches Handbuch, Karl Schmidt GmbH, Neckarsulm 1967, S. 231/232).

Für den vorstehend aufgeführten Zweck kommen als Aluminium-Lagerlegierungen insbesondere diejenigen der Gruppen AlSi12CuMgNi, AlZn5SiCuPb und AlZn4,5SiCuPb in Betracht. Bei diesen Aluminium-Lagerlegierungen sind in einer aus Aluminium-Mischkristall bestehenden Grundmasse feinverteilte heterogene harte Silizide und Aluminide eingelagert. Daher zeichnen sich diese Aluminium-Lagerlegierungen durch geringe Verschleißraten und hohe Ermüdungsfestigkeit aus und besitzen gegenüber gehärteten Pleuel- und Lagerzapfen von Kurbelwellen ein ausgezeichnetes Gleitverhalten.

Um bei den aus diesen Lagerlegierungen hergestellten Gleitlagerschalen örtlich auftretende Lastspitzen abzubauen und damit eine gleichmäßige Verteilung der Belastung auf die Lagermetallschicht zu erreichen, ist es aus der EP-B-0 059 273 bekannt, die Lagermetallschicht mit einer 2 bis 8 »m dicken Zinkphosphatschicht zu überziehen. Dadurch vermag sich die Gleitlagerschale den bei der Beanspruchung der Lagerung und/oder bei ihrer Herstellung auftretenden Abweichungen von der geometrischen Form der Lagerstelle anzupassen und den erforderlichen Laufspiegel auszubilden.

In der US-A-2 477 841 ist ein Verfahren zum Auftragen von Phosphat- und Fluorid-Lösungen auf Aluminium enthaltende metallische Oberflächen beschrieben, um deren Verschleißwiderstand und Schmierstoffbenetzbarkeit zu verbessern. Die wäßrigen Lösungen enthalten im wesentlichen Dihydrogenphosphat, Oxidationsmittel, Borfluorid und Borsäure.

Es ist die Aufgabe der vorliegenden Erfindung, die aus Phosphat bestehende Laufschicht so zu verbessern, daß Freßsicherheit auch bei kurzzeitigem Ölmangel, insbesondere unter extremen Bedingungen, gewährleistet ist.

Die Lösung dieser Aufgabe erfolgt in der Weise, daß die Gleitfläche der Lagermetallschicht mit einer wäßrigen Phosphatierungslösung in Berührung gebracht wird, die
1,5 bis 5,0 g/l Zn
12 bis 24 g/l Na
11 bis 22 g/l P₂O₅
17 bis 33 g/l NO₃
16 bis 30 g/l BF₄
20 bis 39 g/l B(OH)₃
1,0 bis 6,0 g/l NaF
enthält.

Das erfindungsgemäße Verfahren ist für die Beschichtung aller Lagermetallschichten aus Weißmetall, Bronze oder Aluminium-Lagerlegierungen geeignet, wobei im Hinblick auf die Aufgabenstellung die Lagermetallschichten vorzugsweise aus Aluminium-Lagerlegierungen des Typs AlSi12CuNiMg, AlSn6Cu, AlZn5SiCuPb oder AlZn4,5SiCuPb bestehen.

Im Rahmen der vorzugsweisen Ausgestaltung ist das erfindungsgemäße Verfahren insbesondere für Gleitlagerschalen aus Verbundwerkstoff, bei denen die Lagermetallschicht mit einer Stützschicht aus Stahl, hochfester Aluminiumlegierung, Gußeisen, Bronze oder dergleichen stoffschlüssig verbunden ist, geeignet.

Die auf die Lagermetallschicht aufgetragene Phosphatschicht ist nicht nur in der Lage, eine gleichmäßige Verteilung der Belastung auf die Lagermetallschicht zu bewirken und eine Anpassung an ggf. vorhandene geometrische Ungenauigkeiten der Lagerschale vorzunehmen, sondern ermöglicht auch ein problemloses Einlaufverhalten bei kurzzeitigem Ölmangel unter extremen Belastungen.

Die Beschichtung der Lagermetallschicht mit einem Phosphatüberzug erfolgt im Rahmen der weiteren Ausgestaltung des erfindungsgemäßen Verfahrens in der Weise, daß die Gleitlagerschalen nach dem üblichen Reinigungsvorgang in eine wäßrige, Zink enthaltende Phosphatierungslösung mit einer Temperatur von 30 bis 90°C und einer Zusammensetzung von
2,1 bis 3,5 g/l Zn
13,6 bis 22,8 g/l Na
12,2 bis 20,3 g/l P₂O₅
18,9 bis 31,4 g/l NO₃
17,3 bis 28,8 g/l BF₄
22,5 bis 37,5 g/l B(OH)₃
1,5 bis 5,0 g/l NaF
5 bis 30 min lang getaucht werden und anschließend in Wasser mit einer Temperatur von 30 bis 90°C gespült werden.

Eine vorzugsweise einsetzbare wäßrige Phosphatierungslösung besteht aus:
2,5 bis 3,1 g/l Zn
18,0 bis 20,0 g/l Na
14,6 bis 17,9 g/l P₂O₅
22,6 bis 27,7 g/l NO₃
22,5 bis 23,6 g/l BF₄
27,0 bis 33,0 g/l B(OH)₃
1,8 bis 4,4 g/l NaF
Eine vorteilhafte Ausgestaltung des erfindungsgemäßen Verfahrens besteht darin, die Lagermetallschicht mit einer Phosphatierungslösung in Berührung zu bringen, die mindestens einen Aktivator aus der Gruppe Fluorid, Hexafluorosilikat, Glykolat, Citrat und Tartrat enthält. Die Aktivatoren wirken beschleunigend und vergleichmäßigend auf die Phosphatschichtbildung und steuern das Flächengewicht der Phosphatschicht.

Um die Ausbildung besonders dünner, feinkristalliner Phosphatschichten weiter zu unterstützen, empfiehlt sich die Anwendung von Aktivierungsmitteln, z.B. auf Titanphosphatbasis, in dem Spülbad.

Das erfindungsgemäße Verfahren wird anhand des folgenden Ausführungsbeispiels näher erläutert.

Mehrere Gleitlagerschalen, jeweils bestehend aus einer Stahlstützschicht und einer darauf aufplattierten Aluminium-Lagermetallschicht des Typs AlZn4,5SiCuPb, wurden nach der Reinigung in eine wäßrige Phosphatierungslösung von 75°C der o.g. Zusammensetzung für die Dauer von 20 min eingetaucht. Die mit warmem Wasser von 50°C abgespülten Gleitlagerschalen besaßen eine Phosphat-Laufschicht mit einer Dicke von 2 »m. Diese Gleitlagerschalen wurden anschließend als Lagerungen für die Pleuel- und Lagerzapfen einer Kurbelwelle einer Verbrennungskraftmaschine verwendet. Die Gleitlagerschalen waren über ca. 300 h Laufzeit einem Vollastbetrieb ausgesetzt, wobei mehrfach kurzzeitig ohne Schmieröl gefahren wurde. Die Ergebnisse aus diesem Versuch zeigen eindeutig, daß auch bei hoher Belastung gute Gleiteigenschaften bei minimalstem Verschleiß gewährleistet sind.

## Patentansprüche

1. Verfahren zum Aufbringen einer 0,5 bis 10 »m, vorzugsweise 2 bis 8 »m, dicken Phosphat-Laufschicht auf die Lagermetallschicht von Gleitlagerschalen, insbesondere für die Lagerung von hochbelasteten Triebwerkselementen in Verbrennungskraftmaschinen, vorzugsweise für die Lagerung der Pleuel- und Lagerzapfen von Kurbelwellen, mittels einer wäßrigen, Zink enthaltenden Phosphatierungslösung, dadurch gekennzeichnet, daß die Gleitfläche der Lagermetallschicht mit einer Phosphatierungslösung in Berührung gebracht wird, die
1,5 bis 5,0 g/l Zn
12 bis 24 g/l Na
11 bis 22 g/l P₂O₅
17 bis 33 g/l NO₃
16 bis 30 g/l BF₄
20 bis 39 g/l B(OH)₃
1,0 bis 6,0 g/l NaF
enthält.

2. Verfahren nach Anspruch 1, gekennzeichnet durch eine Phosphatierungslösung der Zusammensetzung:
2,1 bis 3,5 g/l Zn
13,6 bis 22,8 g/l Na
12,2 bis 20,3 g/l P₂O₅
18,9 bis 31,4 g/l NO₃
17,3 bis 28,8 g/l BF₄
22,5 bis 37,5 g/l B(OH)₃
1,5 bis 5,0 g/l NaF

3. Verfahren nach Anspruch 1, gekennzeichnet durch eine Phosphatierungslösung der Zusammensetzung:
2,5 bis 3,1 g/l Zn
18,0 bis 20,0 g/l Na
14,6 bis 17,9 g/l P₂O₅
22,6 bis 27,7 g/l NO₃
22,5 bis 23,6 g/l BF₄
27,0 bis 33,0 g/l B(OH)₃
1,8 bis 4,4 g/l NaF

4. Verfahren nach den Ansprüchen 1 bis 3, dadurch gekennzeichnet, daß die Lagermetallschicht aus Weißmetall, Bronze oder Aluminium-Lagerlegierung besteht.

5. Verfahren nach Anspruch 4, dadurch gekennzeichnet, daß die Lagermetallschicht aus einer Aluminium-Lagerlegierung des Typs AlSi12CuNiMg, AlSn6Cu, AlZn5SiCuPb oder AlZn4,5SiCuPb besteht.

6. Verfahren nach den Ansprüchen 1 bis 5, dadurch gekennzeichnet, daß die Lagermetallschicht mit einer Stützschicht aus Stahl, hochfester Aluminiumlegierung, Gußeisen, Bronze oder dergleichen stoffschlüssig verbunden ist.

7. Verfahren nach den Ansprüchen 1 bis 6, dadurch gekennzeichnet, daß die Phosphatierungslösung einen Aktivator aus der Gruppe Fluorid, Hexafluorosilikat, Glykolat, Citrat und Tartrat enthält.

8. Verfahren nach den Ansprüchen 1 bis 7, dadurch gekennzeichnet, daß die Behandlung der Gleitlagerschalen bei einer Lösungstemperatur zwischen 30 und 90°C für die Dauer von 5 bis 30 min durchgeführt wird.

## Claims

1. A method for applying a phosphate sliding layer 0.5 to 10 »m, preferably 2 to 8 »m, thick, to the bearing metal layers of sliding surface bearing shells, in particular for mounting heavy-duty power-transmission elements in internal combustion engines, preferably for mounting the connecting-rod journals and bearing journals of crankshafts, by means of an aqueous, zinc-containing phosphating solution, characterised in that the sliding surface of the bearing metal layer is brought into contact with a phosphating layer which contains
1.5 to 5.0 g/l Zn
12 to 24 g/l Na
11 to 22 g/l P₂O₅
17 to 33 g/l NO₃
16 to 30 g/l BF₄
20 to 39 g/l B(OH)₃
1.0 to 6.0 g/l NaF.

2. A method according to Claim 1, characterised by a phosphating solution of the composition:
2.1 to 3.5 g/l Zn
13.6 to 22.8 g/l Na
12.2 to 20.3 g/l P₂O₅
18.9 to 31.4 g/l NO₃
17.3 to 28.8 g/l BF₄
22.5 to 37.5 g/l B(OH)₃
1.5 to 5.0 g/l NaF.

3. A method according to Claim 1, characterised by a phosphating solution of the composition: 2.5 to 3.1 g/l Zn
18.0 to 20.0 g/l Na
14.6 to 17.9 g/l P₂O₅
22.6 to 27.7 g/l NO₃
22.5 to 23.6 g/l BF₄
27.0 to 33.0 g/l B(OH)₃
1.8 to 4.4 g/l NaF.

4. A method according to Claims 1 to 3, characterised in that the bearing metal layer consists of white metal, bronze or aluminium bearing alloy.

5. A method according to Claim 4, characterised in that the bearing metal layer consists of an aluminium bearing alloy of the type AlSi12CuNiMg, AlSn6Cu, AnZn5SiCuPb or AlZn4.5SiCuPb.

6. A method according to Claims 1 to 5, characterised in that the bearing metal layer is bonded to a supporting layer of steel, high-strength aluminium alloy, cast iron, bronze or the like.

7. A method according to Claims 1 to 6, characterised in that the phosphating solution contains an activator from the group fluoride, hexafluorosilicate, glycolate, citrate and tartrate.

8. A method according to Claims 1 to 7, characterised in that the treatment of the sliding-bearing shells is effected at a solution temperature of between 30 and 90°C for 5 to 30 minutes.

## Revendications

1. Procédé d'application d'une couche de roulement à base de phosphate d'une épaisseur de 0,5 à 10 »m, de préférence de 2 à 8 »m, sur la couche de métal pour coussinet de paliers lisses, notamment pour le montage de pièces de transmission dans des moteurs à combustion interne, de préférence pour le montage du tourillon de bielle et du tourillon de palier de vilebrequins, au moyen d'une solution de phosphatation aqueuse contenant du zinc, caractérisé en ce qu'il consiste à mettre la surface de frottement de la couche de métal pour coussinet en contact avec une solution de phosphatation, qui contient de 1,5 à 5,0 g de Zn par litre
de 12 à 24 g de Na par litre
de 11 à 22 g de P₂O₅ par litre
de 17 à 33 g de NO₃ par litre
de 16 à 30 g de BF₄ par litre
de 20 à 39 g de B(OH)₃ par litre
de 1,0 à 6,0 g de NaF par litre.

2. Procédé suivant la revendication 1, caractérisé par une solution de phosphatation ayant la composition suivante :
de 2,1 à 3,5 g de Zn par litre
de 13,6 à 22,8 g de Na par litre
de 12,2 à 20,3 g de P₂O₅ par litre
de 18,9 à 31,4 g de NO₃ par litre
de 17,3 à 28,8 g de BF₄ par litre
de 22,5 à 37,5 g de B(OH)₃ par litre
de 1,5 à 5,0 de NaF par litre.

3. Procédé suivant la revendication 1, caractérisé par une solution de phosphatation ayant la composition suivante :
de 2,5 à 3,1 g de Zn par litre
de 18,0 à 20,0 g de Na par litre
de 14,6 à 17,9 g de P₂O₅ par litre
de 22,6 à 27,7 g de NO₃ par litre
de 22,5 à 23,6 g de BF₄ par litre
de 27,0 à 33,0 g de B(OH)₃ par litre
de 1,8 à 4,4 g de NaF par litre.

4. Procédé suivant l'une des revendications 1 à 3, caractérisé en ce que la couche de métal pour coussinet est constituée de métal blanc, de bronze ou d'un alliage d'aluminium pour coussinets.

5. Procédé suivant la revendication 4, caractérisé en ce que la couche de métal pour coussinet est constituée d'un alliage d'aluminium pour coussinet du type AlSi12CuNiMg, AlSn6Cu, AlZn5SiCuPb ou AlZn4,5SiCuPb.

6. Procédé suivant l'une des revendications 1 à 5, caractérisé en ce que la couche de métal pour coussinet est reliée à une couche support en acier, en aluminium très résistant, en fonte, en bronze ou analogue.

7. Procédé suivant l'une des revendications 1 à 6, caractérisé en ce que la solution de phosphatation contient un activateur choisi parmi un fluorure, un hexafluorosilicate, un glycolate, un citrate et un tartrate.

8. Procédé suivant l'une des revendications 1 à 7, caractérisé en ce qu'il consiste à effectuer le traitement des coussinets de palier lisse à une température de la solution comprise entre 30 et 90°C pendant une durée de 5 à 30 minutes.
